# EUROPÄISCHE PATENTSCHRIFT

(11) **EP 3 500 619 B1**
(45) Veröffentlichungstag und Bekanntmachung des Hinweises auf die Patenterteilung: **07.10.2020**
(21) Anmeldenummer: 17757715.2
(22) Anmeldetag: 14.08.2017
(51) Int. Cl.: C08J 7/12, C23C 18/20, C23C 18/31

(54) **MODIFIZIERTE ABS-OBERFLÄCHEN UND VERFAHREN ZU IHRER HERSTELLUNG**
MODIFIED ABS SURFACES AND METHOD FOR PRODUCING SAME
SURFACES EN ABS MODIFIÉES ET LEUR PROCÉDÉ DE FABRICATION

(30) Priorität: 18.08.2016 DE 102016215462
(43) Veröffentlichungstag der Anmeldung: 26.06.2019
(73) Patentinhaber: Leibniz-Institut für Polymerforschung Dresden e.V., 01069 Dresden (DE)
(72) Erfinder: LEHMANN, Dieter, 01640 Coswig (DE)
(74) Vertreter: Rauschenbach, Marion
(86) Internationale Anmeldenummer: PCT/EP2017/070619
(87) Internationale Veröffentlichungsnummer: WO 2018/033520

(56) Entgegenhaltungen:
- US-A- 4 298 636
- US-A- 4 701 350
- US-A1- 2002 074 696
- US-A1- 2009 176 022
- GARCIA A ET AL: "ABS Polymer Electroless Plating through a One-Step Poly(acrylic acid) covalent grafting", ACS APPLIED MATERIALS & INTERFACES, ACS AMERICAN CHEMICAL SOCIETY, US, Bd. 2, Nr. 4, 28. April 2010 (2010-04-28), Seiten 1177-1183, XP008123173, ISSN: 1944-8244, DOI: 10.1021/AM1000163 [gefunden am 2010-03-30]
- CHEN DEXIN ET AL: "Layer by layer electroless deposition: An efficient route for preparing adhesion-enhanced metallic coatings on plastic surfaces", CHEMICAL ENGINEERING JOURNAL, ELSEVIER SEQUOIA, LAUSANNE, CH, Bd. 303, 27. Mai 2016 (2016-05-27), Seiten 100-108, XP029708889, ISSN: 1385-8947, DOI: 10.1016/J.CEJ.2016.05.114
- CHEN DEXIN ET AL: "Formation of reflective and conductive silver film on ABS surface via covalent grafting and solution spray", APPLIED SURFACE SCIENCE, ELSEVIER, AMSTERDAM, NL, Bd. 349, 14. Mai 2015 (2015-05-14), Seiten 503-509, XP029205690, ISSN: 0169-4332, DOI: 10.1016/J.APSUSC.2015.05.039
- OLIVERA SHARON ET AL: "Plating on acrylonitrile-butadiene-styrene (ABS) plastic: a review", JOURNAL OF MATERIALS SCIENCE, KLUWER ACADEMIC PUBLISHERS, DORDRECHT, Bd. 51, Nr. 8, 4. Januar 2016 (2016-01-04) , Seiten 3657-3674, XP035914683, ISSN: 0022-2461, DOI: 10.1007/S10853-015-9668-7 [gefunden am 2016-01-04]

## Beschreibung

Die Erfindung bezieht sich auf die Gebiete der Chemie und des Maschinenbaus und betrifft modifizierte ABS-Oberflächen, wie sie beispielsweise für das Lackieren, Bedrucken, Kleben und Beschichten mit Metallen oder (Kunststoff-)Folien, sowie für das Mehrkomponentenspritzgießen und (grenzflächen-)reaktive Spritzgießen eingesetzt werden können, und die beispielsweise als elektromagnetische Abschirmung, als Reflektoren, als leitfähige Leicht-Bauteile, als Leiterplatten oder auch für dekorative Anwendungen im Sanitärbereich oder als Schmuck oder Ziergegenstände zur Anwendung kommen können, und ein Verfahren zu ihrer Herstellung.
Eine Metallisierung von Oberflächen setzt eine gute Haftung der aufzubringenden Metallschicht auf der Oberfläche des betreffenden Bauteiles voraus. Für die Metallisierung von Oberflächen, insbesondere Kunststoffoberflächen, sind aus dem Stand der Technik mehrere Verfahren bekannt.
Die Qualität der Metallisierung und Haftung der Schicht an der Oberfläche von Kunststoffteilen wird unter anderem von der Art der Modifikation der Kunststoffoberfläche beeinflusst. Diese ist maßgeblich für eine hohe Haftung der gesamten Metallschicht an der Kunststoffoberfläche verantwortlich. Bekannt ist, die Oberfläche durch Beizen zu modifizieren. Dabei werden üblicherweise CrO₃- oder Cr₂O₃-Verbindungen eingesetzt.
Nachteilig bei dieser Art der Modifikation der Kunststoffoberflächen ist, dass CrO₃-oder Cr₂O₃-Beizen toxisch und cancerogen sind, weswegen deren Einsatz in der Europäischen Union ab September 2016 einer speziellen fallbezogenen Ausnahmegenehmigung bedarf.
"Chrom(VI)-Verbindungen sind äußerst giftig. Sie sind mutagen und schädigen die DNA. Sie gelangen über die Atemwege in den Körper und schädigen das Lungengewebe. Menschen, die chronisch solchen Verbindungen ausgesetzt sind, haben ein erhöhtes Risiko für Lungenkrebs. Die giftige Wirkung steigt dabei mit der Unlöslichkeit des Salzes. Die RoHS-Richtlinie gefährlicher Stoffe schränkt die Verwendung von Cr(VI)-Verbindungen in Europa stark ein." [Wikipedia: https://de.wikipedia.org/wiki/Chrom, 08.03.2016; RoHS-Richtlinie gefährlicher Stoffe, 19.05.2016].
Da die krebserregenden Chrom(VI)-haltigen Stoffe in vielen Bereichen nicht mehr zulässig sind, besteht ein großes Interesse an Chrom(VI)-freien Alternativen.

Um eine Metallisierung einer Kunststoffoberfläche zu erreichen, wird bei den bisher am Häufigsten eingesetzten Verfahren in einem ersten Verfahrensschritt die Kunststoffoberfläche modifiziert (aktiviert), wobei hierfür verschiedene Möglichkeiten der Modifizierung aus dem Stand der Technik bekannt sind. Bisher wird üblicherweise die Oberfläche eines Kunststoffteiles nach dem Formgebungsprozess mit Beizen modifiziert, um die Hafteigenschaften der anschließend aufzubringenden Metallschicht zu verbessern.

Nach der Modifizierung der Kunststoffoberflächen werden weitere Verfahrensschritte, wie beispielsweise das Spülen mit Wasser und die Bekeimung mit Edelmetallen oder Metallen realisiert.

Die Plasma- und Coronabehandlung sind die am weitesten verbreiteten Methoden zur Vorbehandlung von Kunststoffoberflächen für die Metallisierung. Durch elektrische Entladung in Luft (Corona) oder im leichten Vakuum (Plasma) werden die Kunststoffsubstrate an der Oberfläche aktiviert, das heißt, durch Bildung polarer Gruppen modifiziert. Dadurch wird eine erhöhte Reaktivität an der Kunststoffoberfläche erzielt. Derart behandelte Kunststoffoberflächen weisen eine bessere Haftung bei nachfolgenden technologischen Schritten auf (Mehrkomponentenspritzgießtechnik 2000, Springer-VDI-Verlag, Düsseldorf, 2000).

In der DE 10 042 566 A1 wird ein Verfahren zur Modifizierung von Kunststoffoberflächen aller Art während oder unmittelbar nach oder nach einem Formgebungsprozess beschrieben, bei dem die Temperatur der Oberfläche des Kunststoffes mindestens die on-set-Temperatur des Reaktionspeaks in der entsprechenden DSC-Kurve ist. Die Modifizierung erfolgt, indem die sich bildende Kunststoffoberfläche oder die sich unmittelbar vorher gebildete Kunststoffoberfläche mit Modifikatorsubstanz(en) in Kontakt gebracht wird, die mit der Oberfläche eine Reaktion eingehen und/oder ganz oder teilweise durch Interdiffusion in die Oberfläche eindringen und/oder auf der Oberfläche aufschmelzen.

Ebenfalls bekannt ist ein Verfahren zum stromlosen Metallisieren eines ABS-Polymers, bei dem die Oberfläche eines Probenkörpers aus ABS in einem ersten Verfahrensschritt mit einer Lösung aus 1,4-Phenylendiammonium-Dihydrochlorid, HCl, NaNO₂ und Acrylsäure modifiziert wird, anschließend der modifizierte Probenkörper in eine Lösung aus NH₃, CuSO₄ 5H₂O bei Raumtemperatur getaucht wird und nachfolgend die Cu²⁺-Ionen in einer NaBH₄-NaOH-Lösung durch Eintauchen des Probekörpers für 10 min. bei 40°C reduziert werden. Abschließend wird eine Platin-Schicht mittels stromlosen Metallisierens realisiert (Garcia, A. et al.: "ABS Polymer Electroless Plating throug a One-Step Poly(acryl acid) Covalent Grafting", ACS Applied Materials & Interfaces, Vol. 2, No. 4, Seite 1177 -1183, 2010).

Die Metallisierung von ABS-Kunststoffoberflächen kann auch mittels galvanischer/elektrochemischer Abscheidung unter Anwendung von elektrischem Strom realisiert werden.
Die Galvanisierung von Kunststoffbauteilen aus Acrylnitril-Butadien-Styrol (ABS), ABS mit Polyamid modifiziert (ABS/PA) und/oder ABS mit Polycarbonat modifiziert (ABS/PC) (im Weiteren nur als ABS bezeichnet) ist ein bekanntes und im großtechnischen Maßstab angewandtes Verfahren. Ausgangspunkt des klassischen Verfahrens ist auch hier das Beizen mit Chromschwefelsäure, bei dem die feinverteilte Kautschuk-/Polybutadien-Phase an der Oberfläche oxidiert und aus der Harzphase herausgelöst wird. Dadurch entstehen gleichmäßige, submikroskopische Vertiefungen auf der ABS-Oberfläche, ohne dass subjektiv die glatte Oberfläche verändert wird. Diese winzigen, feinverteilten Vertiefungen bilden die Grundlage für eine mechanische Verankerung und gewährleisten eine gute Haftfestigkeit der Metallbeschichtung auf der ABS-Oberfläche. Zur Gewährleistung einer guten Haftung wurden spezielle, modifizierte ABS-Kunststoffe erzeugt, die beispielsweise mit Polyamid (PA) oder Polycarbonat (PC) modifiziert sind, die eine optimale Haftfestigkeit der Metallbeschichtung bei konstanten Verarbeitungs- und Beschichtungsbedingungen gewährleisten.

Das klassische Verfahren der Galvanisierung von ABS-Kunststoffoberflächen umfasst folgende technologische Schritte:
- Beizen mit Chromschwefelsäure
- mehrfaches Spülen
- Entgiften, d.h. Reduktion der Cr(VI)-Verbindungen
- Spülen
- Aktivieren durch Tauchen in Metallsalzlösungen zum Aufbringen von Edelmetallkeimen, die in den Poren festsitzen,
- Spülen
- Aufbringen einer elektrisch leitenden Schicht
- Spülen
- elektrolytische Metallabscheidung

Nachteilig bei allen bekannten Verfahren zur Metallisierung von ABS-Oberflächen ist, dass einerseits die verwendeten Materialien und Verfahren zur Metallisierung aufwendig und umweltbelastend sind und andererseits die Haftung der Metallisierung auf beliebigen Oberflächen in vielen Fällen noch nicht ausreichend gut ist.

Die Aufgabe der vorliegenden Erfindung besteht in der Angabe von modifizierten ABS-Oberflächen, die aus umweltverträglichen Materialien bestehen und eine sehr gute Haftung zwischen Oberfläche und Beschichtung aufweisen, und weiterhin in der Angabe eines einfachen, umweltverträglichen und kostengünstigen Verfahrens zur Herstellung von modifizierten ABS-Oberflächen.

Die Aufgabe wird durch die in den Ansprüchen angegebene Erfindung gelöst. Vorteilhafte Ausgestaltungen sind Gegenstand der Unteransprüche.

Bei den erfindungsgemäßen modifizierten ABS-Oberflächen sind mindestens teilweise die an der Oberfläche zugänglichen Doppelbindungen der Kautschuk-/Polybutadien-Komponente des ABS mit Chlorid und/oder Bromid und/oder Jodid und/oder mit Epoxy- und/oder Chlorhydrin-Gruppen chemisch modifizert. An diese Chlorid und/oder Bromid und/oder Jodid und/oder mit Epoxy- und/oder Chlorhydrin-Gruppen sind wiederum durch reaktive Umsetzung Amino- und/oder Thiol- und/oder Thiolat-Gruppen von Polymeren und/oder Polyelektrolyten chemisch gekoppelt, wobei die so chemisch gekoppelten Polymere und/oder Polyelektrolyte zur Einlagerung von Metallkeimen für die elektrochemische/galvanische Abscheidung von metallischen Niederschlägen und/oder Überzügen und/oder Schichten auf die modifizierte ABS-Oberfläche in der Lage sind.

Vorteilhafterweise sind die an der Oberfläche zugänglichen Doppelbindungen der Kautschuk-/Polybutadien-Komponente des ABS vor der Kopplung von Polymeren und/oder Polyelektrolyten mit Epoxy-Gruppen chemisch modifiziert.

Weiterhin vorteilhafterweise sind Polymere und/oder Polyelektrolyte durch reaktive Umsetzung Bromid und/oder Jodid und/oder mit Epoxy- und/oder Chlorhydrin-Gruppen der Kautschuk-/Polybutadien-Komponente des ABS mit Amino-Gruppen dieser Polymere und/oder Polyelektrolyten chemisch gekoppelt.

Ebenfalls vorteilhafterweise sind als chemisch gekoppelte, kationische Polyelektrolyte ein oder mehrere kationische Polyelektrolyte, wie Polyethylenimin und/oder Polyallylamin und/oder Polyvinylamin, vorhanden.

Und auch vorteilhafterweise sind als Polymere ein oder mehrere, mit Amino-und/oder Thiol- und Thiolat-Gruppen modifizierte, wasserlösliche Polymere, wie (Meth-)Acrylsäure-(Co-)Polymere und/oder (Meth-Acrylsäureester-(Co-)Polymere und/oder Maleinsäure(anhydrid)-Copolmere und/oder Itaconsäure(anhydrid)-(Co-)Polymere und/oder Fumarsäure-Copolymere und/oder deren Derivate vorhanden. Vorteilhaft ist es auch, wenn die Polymere und/oder Polyelektrolyte, die reaktive primäre und/oder sekundäre und/oder tertiäre Amino- und/oder quartäre Ammonium-Gruppen aufweisen, nach der reaktiven Umsetzung chemisch kovalent vernetzt und/oder in einem Polyelektrolytkomplex komplexiert/ionisch vernetzt sind, wobei noch vorteilhafterweise Vernetzungshilfsmittel, wie niedermolekulare und/oder oligomere und/oder polymere Epoxidverbindungen, vorhanden sind.

Bei dem erfindungsgemäßen Verfahren zur Herstellung von modifizierten ABS-Oberflächen werdne die Doppelbindungen der Kautschuk-/Polybutadien-Komponente an der Oberfläche des ABS durch Epoxidierung und/oder Halogenierung und/oder Chlorhydrinierung aktiviert und mit Chlorid und/oder Bromid und/oder Jodid und/oder mit Epoxy- und/oder Chlorhydrin-Gruppen modifiziert und nachfolgend Chlorid und/oder Bromid und/oder Jodid und/oder die Epoxy- und/oder Chlorhydrin-Gruppen mit Amino- und/oder Thiol- und/oder Thiolat-Gruppen von Polymeren und/oder Polyelektrolyten reaktiv unter chemischer Kopplung dieser Polymere und/oder Polyelektrolyte umgesetzt und nachfolgend in die gekoppelten Polymere und/oder Polyelektrolyte Metallionen eingelagert und diese nachfolgend zu Metallkeimen für die elektrochemische/galvanische Abscheidung von metallischen Niederschlägen und/oder Überzügen und/oder Schichten reduziert.

Vorteilhafterweise werden die Polymere und/oder Polyelektrolyte in einem nachfolgenden Schritt kovalent vernetzt und/oder durch Polyelektrolytkomplexbildung komplexiert/ionisch vernetzt, wobei noch vorteilhafterweise Vernetzungshilfsmittel in Form von niedermolekularen und/oder oligomeren und/oder polymeren Epoxy-Verbindungen zugegeben werden.

Ebenfalls vorteilhafterweise wird die Epoxidierung durch Zugabe von Percarbonsäuren, wie Peressigsäure, oder Carbonsäuren, wie Ameisensäure, und Wasserstoffperoxid durchgeführt.

Auch vorteilhafterweise wird die Halogenierung durch Brom und/oder Jod und/oder eine Bromid/Bromat-Umsetzung unter Säurezugabe und/oder eine Jodid/Jodat-Umsetzung unter Säurezugabe durchgeführt.

Weiterhin vorteilhafterweise wird die Chlorhydrinierung durch Zugabe von Hypochlorit unter Säurezugabe realisiert.

Vorteilhaft ist es auch, wenn als ABS-Oberflächen, Oberflächen aus unverändertem ABS und/oder aus ABS-mit Polyamid modifiziert (ABS/PA) und/oder aus ABS mit Polycarbonat modifiziert (ABS/PC) eingesetzt werden.

Ebenfalls vorteilhaft ist es, wenn die gekoppelten Polymere und/oder Polyelektrolyte mit Metallsalzen in Kontakt gebracht werden, und die, in die gekoppelten Polymere und/oder Polyelektrolyte eingelagerten Metallionen dann zu Metallkeimen reduziert werden und nachfolgend die elektrochemische Abscheidung von metallischen Niederschlägen und/oder Überzügen und/oder Schichten durchgeführt wird.

Und auch vorteilhaft ist es, wenn als Metallsalze/Metallionen Edelmetallsalze/-ionen und/oder Kupfersalze/-ionen eingelagert und zu Metallkeimen reduziert werden.

Erfindungsgemäß erfolgt die Verwendung der erfindungsgemäßen modifizierten Oberflächen aus ABS, die nach dem erfindungsgemäßen Verfahren hergestellt worden sind, für die eletrochemische/galvanische Beschichtung mit Metall(en).

Mit der erfindungsgemäßen Lösung ist es erstmals möglich modifizierte ABS-Oberflächen anzugeben, die aus umweltverträglichen Materialien bestehen und eine sehr gute Haftung zwischen Oberfläche und Beschichtung aufweisen, und weiterhin kann erstmals ein Verfahren zur Herstellung von modifizierten ABS-Oberflächen angegeben werden, welches einfach, umweltverträglich und kostengünstig ist.

Mit der erfindungsgemäßen Lösung ist es möglich, modifizierte Oberflächen von ABS-Kunststoff(bauteil)en (hierzu zählen ABS-, ABS/PA- und ABS/PC-Kunststoffe), die anschließend in ein Verfahren zur galvanischen/elektrochemischen Abscheidung von metallischen Niederschlägen und/oder Überzügen und/oder Schichten aus Metallen (Kunststoffgalvanisierung) eingesetzt werden sollen, mittels eines Cr(VI)-freien Galvanisierungsverfahrens mit Metallen zu beschichten.

ABS ist grundsätzlich Acrylnitril-Butadien-Styrol. Jedoch sollen alle die nachfolgend genannten ABS-Materialien im Rahmen dieser Erfindung unter dem Begriff ABS zusammengefasst und benannt sein. Dies sind ABS-Oberflächen, die Oberflächen aus unverändertem ABS und/oder aus ABS mit Polyamid modifiziert (ABS/PA) und/oder aus ABS mit Polycarbonat modifiziert (ABS/PC) sein können. Alle diese ABS-Oberflächen können erfindungsgemäß modifiziert werden.

Erfindungsgemäß sind mindestens teilweise die an der ABS-Oberfläche zugänglichen Doppelbindungen der Kautschuk-/Polybutadien-Komponente des ABS mit Chlorid und/oder Bromid und/oder Jodid und/oder mit Epoxy- und/oder mit Chlorhydrin-Gruppen chemisch modifiziert.
Erfindungsgemäß soll unter der Modifizierung der Doppelbindungen verstanden werden, dass an die Doppelbindungen über Additionsreaktionen Chlorid und/oder Bromid und/oder Jodid gekoppelt werden, und/oder über Epoxydierung mit Percarbonsäuren an den Doppelbindungen Epoxy-Gruppen entstehen, und/oder über Chlorhydrinierung an den Doppelbindungen Chlorhydrin-Gruppen entstehen.

Nach einer weiteren reaktiven Umsetzung sind dann über das Chlorid und/oder Bromid und/oder Jodid und/oder über die Epoxy- und/oder Chlorhydrin-Gruppen Amino- und/oder Thiol- und/oder Thiolat-Gruppen von Polymeren und/oder Polyelektrolyten chemisch gekoppelt.

Diese so an der ABS-Oberfläche chemisch gekoppelten Polymere und/oder Polyelektrolyte sind dann zur Einlagerung von Metallkeimen für die elektrochemische/galvanische Abscheidung von metallischen Niederschlägen und/oder Überzügen und/oder Schichten auf die modifizierte ABS-Oberfläche in der Lage.

Erfindungsgemäß hergestellt werden die erfindungsgemäßen modifizierten ABS-Oberflächen, indem mindestens teilsweise die an der Oberfläche zugänglichen Doppelbindungen der Kautschuk-/Polybutadien-Komponente des ABS durch Epoxidierung und/oder Halogenierung und/oder Chlorhydrinierung aktiviert und zu Chlorid und/oder Bromid und/oder Jodid und/oder zu Epoxy- und/oder Chlorhydrin-Gruppen modifiziert werden. Nachfolgend werden Chlorid und/oder Bromid und/oder Jodid und/oder Epoxy- und/oder Chlorhydrin-Gruppen mit Amino- und/oder Thiol-und/oder Thiolat-Gruppen von Polymeren und/oder Polyelektrolyten reaktiv unter chemischer Kopplung dieser Polymere und/oder Polyelektrolyte umgesetzt. Danach werden in die gekoppelten Polymere und/oder Polyelektrolyte Metallionen eingelagert und diese nachfolgend zu Metallkeimen für die elektrochemische/galvanische Abscheidung von metallischen Niederschlägen und/oder Überzügen und/oder Schichten reduziert.

Vorteilhafterweise sind nach einer Epoxidierung der Doppelbindungen Epoxy-Gruppen vorhanden, mit denen wiederum vorteilhafterweise die reaktive Umsetzung und chemische Kopplung mit Amino-Gruppen von Polymeren oder Polyelektrolyten realisiert werden kann.

Vorteilhafterweise sind als kationische Polyelektrolyte ein oder mehrere Polykationen, wie Polyethylenimin und/oder Polyallylamin und/oder Polyvinylamin vorhanden.

Als Polymere sind vorteilhafterweise mit Amino- und/oder Thiol- und Thiolat-Gruppen modifizierte, vorzugsweise wasserlösliche Polymere, wie (Meth-)Acrylsäure-(Co-)Polymere und/oder (Meth-)Acrylsäureester-(Co-)Polymere und/oder (Meth-)Acrylsäureamid-(Co-)Polymere und/oder Maleinsäure(anhydrid)-Copolymere und/oder Itaconsäure(anhydrid)-(Co-)Polymere und/oder Fumarsäure-Copolymere und/oder deren Derivate vorhanden.

Die erfindungsgemäß vorhandenen Polymere und/oder Polyelektrolyte, die reaktive und/oder primäre und/oder sekundäre und/oder tertiäre Amino- und/oder quartäre Ammonium-Gruppen aufweisen, sind, vorzugsweise nach einer weiteren reaktiven Umsetzung, chemisch kovalent vernetzt und/oder in einem Polyelektrolytkomplex komplexiert/ionisch vernetzt. Für solche Vernetzungsreaktionen können vorteilhafterweise Vernetzungshilfsmittel, wie niedermolekulare und/oder oligomere und/oder polymere Epoxidverbindungen, oder anionische Polyelektrolyte, wie beispielsweise Polymere mit Carbonsäure- und/oder Sulfonsäure- und/oder Phosphonsäure-Gruppen zur Bildung von Polyelektrolytkomplexen, eingesetzt werden.

Die an der ABS-Oberfläche chemisch gekoppelten Polymere und/oder Polyelektrolyte können auch in einem nachfolgenden Schritt vernetzt und/oder komplexiert werden, wobei ebenfalls vorteilhafterweise niedermolekulare und/oder oligomere und/oder polymere Vernetzungshilfsmittel und/oder Polyelektrolytkomplexbildner zugegeben werden können oder Polymere und/oder Polyelektrolyte eingesetzt werden können, die zusätzlich Komplexbildner-Gruppen, wie Kronenether und/oder Kryptate, oder funktionelle Gruppen mit Komplexbildnereigenschaften, wie beispielsweise Phosphonate, aufweisen.

Vorteilhafterweise sind die an der ABS-Oberfläche chemisch gekoppelten Polymere und/oder Polyelektrolyte chemisch kovalent vernetzt und/oder über eine Polyelektrolytkomplexbildung komplexiert/ionisch vernetzt, wobei dazu auch solche Polymere und/oder Polyelektrolyte eingesetzt werden können, die Komplexbildner-Gruppen, wie Kronenether und/oder Kryptate, oder funktionelle Gruppen mit Komplexbildnereigenschaften, wie beispielsweise Phosphonate, aufweisen.

Vorteilhafterweise erfolgt die Epoxidierung durch Zugabe von Percarbonsäuren, wie Peressigsäure, oder Carbonsäuren, wie Ameisensäure, und Wasserstoffperoxid.
Die Halogenierung kann vorteilhafterweise durch Brom (Br₂) und/oder durch Jod (J₂) und/oder durch eine Bromid/Bromat-Umsetzung unter Säurezugabe, bei der Brom erzeugt wird, und/oder durch eine Jodid/Jodat-Umsetzung unter Säurezugabe, bei der Jod erzeugt wird, durchgeführt werden.
Ebenfalls vorteilhafterweise kann die Chlorhydrinierung durch Zugabe von Hypochlorit unter Säurezusatz realisiert werden.

Nach dieser Epoxidierung und/oder Halogenierung und/oder Chlorhydrinierung der ABS-Oberfläche werden Chlorid und/oder Bromid und/oder Jodid und/oder die Epoxy- und/oder Chlorhydrin-Gruppen mit Amino- und/oder Thiol- und/oder Thiolat-Gruppen von Polymeren und/oder Polyelektrolyten reaktiv umgesetzt.
Erfindungsgemäß sind die chemisch gekoppelten Polymere und/oder Polyelektrolyte an der ABS-Oberfläche zur Aufnahme von Metallkeimen für die elektrochemische Abscheidung von metallischen Niederschlägen und/oder Überzügen und/oder Schichten in der Lage.

Die Metallkeime werden hergestellt, indem die erfindungsgemäß gekoppelten Polymere und/oder Polyelektrolyte mit Metallsalzen in Kontakt gebracht und die in die gekoppelten Polymere und/oder Polyelektrolyte eingelagerten Metallionen dann zu Metallkeimen reduziert werden.

Metallsalze/Metallionen werden, wie in der Galvanotechnik üblich, eingelagert und zu Metallkeimen reduziert. Vorteilhafterweise werden als Metallsalze/-ionen Edelmetallsalze/-ionen und/oder Kupfersalze/-ionen eingesetzt.

Nach der Kopplung der Polymere und/oder Polyelektrolyte mit den Amino- und/oder Thiol- und/oder Thiolat-Gruppen an der modifizierten ABS-Oberfläche werden diese mit gelösten Metallsalzen, vorteilhafterweise Edelmetall- und/oder Kupfersalzen, in Kontakt gebracht, Anschließend werden die eingelagerten Metallsalze/-ionen zu Metallkeimen reduziert und nachfolgend kann dann die elektrochemische/galvanische Abscheidung von metallischen Niederschlägen und/oder Überzügen und/oder Schichten durchgeführt werden. Die Abscheidung erfolgt vorteilhafterweise in einer ersten Stufe stromlos durch reduktives Abscheiden einer Leitschicht und anschließend durch elektrochemische/galvanische Abscheidung von Metallschicht(en) unter Nutzung der Potenzialdifferenz und/oder vorzugsweise unter Anlegen von Strom.

Diese erfindungsgemäße chemische ABS-Oberflächenmodifizierung wird anstatt des bisherigen Beizens mit Chromschwefelsäure durchgeführt und erfolgt technologisch in 2 Schritten:
(I) Chemische Aktivierung der ABS-Oberfläche:
   Durch Epoxidierung (beispielsweise mit Percarbonsäuren, wie Peressigsäure, und/oder der Umsetzung mit Carbonsäure, wie Ameisensäure, und Wasserstoffperoxid) und/oder Halogenierung (mit beispielsweise Brom und/oder Jod und/oder die Bromid/Bromat-Umsetzung unter Säurezugabe und/oder die Jodid/Jodat-Umsetzung unter Säurezugabe) und/oder Chlorhydrinierung (mit Natriumhypochlorit unter Säure-Zugabe) der Kautschuk-/Polybutadien-Komponente, als dem Fachmann bekannte Reaktionen, werden die zugänglichen Doppelbindungen entsprechend modifiziert und für chemische Reaktionen aktiviert.
(II) Chemische Kopplung von Polymer(en) und/oder Polyelektrolyt(en) an der modifizierten ABS-Oberfläche:
   In einer anschließenden reaktiven Umsetzung mit einem Amino-Gruppen und/oder Thiol-Gruppen und/oder vorzugsweise Thiolat-Gruppen enthaltenden kationischen Polyelektrolyten und/oder Polymer(en), die chemisch gekoppelte Komplexbildner(gruppen), wie beispielsweise Kronenether und/oder Kryptate, und/oder funktionelle Gruppen mit Komplexbildnereigenschaften, wie beispielsweise Phosphonate, aufweisen können, wird die ABS-Oberfläche bevorzugt im Bereich der Kautschuk-/Polybutadien-Phase modifiziert.

Die Kopplungsreaktion erfolgt an der ABS-Oberfläche hauptsächlich an den speziell chemisch modifizierten/aktivierten Kautschuk-/Polybutadienbereichen, da die an der ABS-Oberfläche vorhandenen Nitrilgruppen eine geringere Reaktivität aufweisen.

Die so mit Polymerkomponente/n modifizierte ABS-Oberfläche kann
(a) direkt wie im klassischen Verfahren galvanotechnisch weiterverarbeitet
   oder
(b) noch mit mindestens einem weiteren Polymermodifizierungsschritt modifiziert und anschließend, wie im klassischen Verfahren galvanotechnisch weiterverarbeitet werden, indem in der/den Polymerkomponent/en eingelagert Metallkeime erzeugt werden, die für die folgende elektrochemische Metallabscheidung/galvanische Oberflächenmetallisierung und für die Verbundhaftung erforderlich sind.

Die Verbundhaftung wird nicht, wie beim Cr(VI)-Verfahren mechanisch durch die, durch Beizen erzeugten Hohlräume und Hinterschneidungen sondern durch die, chemisch auf der ABS-Oberfläche gekoppelten Polymerschicht mit den eingelagerten/fixierten Metallkeimen realisiert. Die in der Galvanotechnik üblichen Metallsalz(e), die zur Erzeugung von Metallkeimen notwendig sind, werden zusammen mit der/den zu koppelnden Polymerkomponente/n zugesetzt und/oder vorzugsweise nachträglich durch Tauchen in eine Metallsalzlösung in diese gekoppelte Polymerschicht eingebracht. Durch ein dem Fachmann bekanntes Reduktions-Verfahren werden dann die Metallkeime erzeugt.

Die in der Galvanotechnik notwendigen Spül(zwischen)schritte mit destilliertem und/oder dem, in den galvanotechnischen Prozessen vorzugsweise verwendeten entionisierten Wasser, um das Verschleppen von Substanzen zu vermeiden, werden nicht speziell beschrieben. Die Spül(zwischen)schritte werden entsprechend den Erfordernissen angewandt, obwohl sie für die Metallisierung der erfindungsgemäß modifizierten Oberflächen nicht wie beim Cr(VI)-Verfahren in jeder Verfahrensstufe erforderlich sind. Bevorzugt eingesetzt werden Aminogruppen-enthaltende kationische Polyelektrolyte (im Weiteren als Polykation oder Polykationengemisch oder Polykation(gemisch) bezeichnet), die unmodifiziert oder in und/oder nach der Herstellung chemisch beispielsweise mit Silangruppen und/oder Phosphonatgruppen modifiziert sind, für die reaktive Umsetzung mit den Epoxidgruppen und/oder Chlorhydrin-Gruppen und/oder halogenierten und vorzugsweise bromierten Zentren der Kautschuk-/Polybutadienphase unter chemischer Kopplung an der ABS-Oberfläche. Nach der Umsetzung können ungebundene Reste, die den weiteren Prozess stören und die Verbundhaftung zwischen der ABS-Oberfläche und der Metallschicht negativ beeinflussen würden, durch Spülen entfernt werden. In dieses, an der ABS-Oberfläche gekoppelte Polykation(gemisch) werden durch Tauchen gelöste, in der Galvanotechnik übliche Metallsalze eingebracht, die anschließend durch Reduktion mit Reduktionsmitteln, wie beispielsweise Natriumhypophosphit, Zinn(II)-chlorid oder Formaldehyd zu Metallkeimen reduziert werden.

Eine weiterführende Modifizierungsvariante mit zusätzlichen technologischen Schritten ist, dass nach der chemischen Kopplung die mit Polykation(gemisch) modifizierte ABS-Oberfläche mit einem anionischen Polyelektrolyten oder mehreren anionischen Polyelektrolyten im Gemisch (im Weiteren als Polyanion oder Polyanionengemisch oder Polyanion(gemisch) bezeichnet) behandelt/umgesetzt wird, wobei an der ABS-Oberfläche ein Polyelektrolytkomplex als sehr dünne Schicht gebildet wird. Diese Behandlung kann zusätzlich in Kombination mit einem oder mehreren Vernetzungsagenz(ien), wie beispielsweise Di- und/oder Polyepoxy-Verbindungen (wie z.B. Diandiglycidether/Bisphenol-A-diglycidyl-ether, Triglycidylisocyanurat, Glycidyl-(meth-)acylat-Copolymere), erfolgen, was zu einer wenigstens teilweisen Vernetzung der chemisch mit der ABS-Oberfläche gekoppelten, sehr dünnen Polykation(gemisch)phase führt, wodurch eine erhöhte mechanische Stabilität dieser chemisch gekoppelten, sehr dünnen Schicht in sich erreicht wird. Andererseits kann die Behandlung der mit Polykation(gemisch) modifizierten ABS-Oberfläche auch nur mit einem oder mehreren Vernetzungsagenz(ien), d.h. ohne Polyanion(gemisch) erfolgen, wodurch sich mit einer wenigstens teilweisen Vernetzung in der gekoppelten, sehr dünnen Polykation(gemisch)schicht die innere Mechanik erhöht.

Diese Formen der zusätzlichen Behandlung des auf der ABS-Oberfläche fixierten Polykation(gemisch)s durch Bildung eines Polyelektrolytkomplexes und/oder durch chemische Vernetzung führt insgesamt zu einer weiteren Stabilisierung, d.h. einer erhöhten Stabilität der gekoppelten Schicht und folglich zu einer festeren Einbindung von erzeugten Metallkeimen, was zu einer erhöhten Verbundfestigkeit zwischen der ABS-Oberfläche und der galvanisch/elektrochemisch abgeschiedenen Metallschicht führt. Als vorteilhaft hat sich auch erwiesen, die Metallkeime in der mit Polykation(gemisch) modifizierten ABS-Oberfläche zu erzeugen und anschließend diese Oberfläche mit Polyanion(gemisch) und/oder Vernetzungsagenz(ien) zu behandeln.

Die Applikation der Metallsalze, wie vorteilhafterweise Edelmetall- und/oder Kupfersalze, zusammen mit dem Polykation(gemisch) und/oder Polyanion(gemisch) und/oder Vernetzungsagenz(ien) ist ebenfalls möglich. In dieser Verfahrensvariante kann aber auch das gelöste Metallsalz nachträglich durch Tauchen appliziert und zu Metallkeimen reduziert werden.

Diese zusätzlichen Schritte sind technologisch vor allem dann sinnvoll und erforderlich, wenn der eingesetzte ABS-Kunststoff nicht die notwendige (Oberflächen-)Qualität hinsichtlich der Zer- und Verteilung der Kautschuk-/Polybutadien-Phase besitzt, dass nur mit den Schritten (I) chemische Aktivierung und (II) chemische Kopplung von Polymer(en) eine ausreichende Dichte an modifizierten Zentren und/oder eine ausreichende Verbundfestigkeit zwischen der modifizierten ABS-Oberfläche und der galvanisch/elektrochemisch abgeschiedenen Metallschicht erreicht wird.

Als kationische Polyelektrolyte/Polykation(gemisch) für die chemische Kopplung an der modifizierten ABS-Oberfläche werden beispielsweise eingesetzt:
Polyallylamin und/oder Copolymere und/oder
Polyvinylamin und/oder Copolymere und/oder
Polyethylenimin (linear und/oder verzweigt) und/oder Copolymere und/oder
Polyamidamin und/oder Copolymere und/oder
Kationisches Poly-(meth-)acrylamid mit Aminogruppen und/oder Copolymere.

Bevorzugt werden als Polykation(gemisch) eingesetzt:
Polyallylamin und/oder Polyethylenimin und/oder Polyamidamin.

Die Aufzählung listet die verfügbaren/kommerziellen und synthetisch leicht herstellbaren Polykationen auf, beruht aber nicht auf Vollständigkeit hinsichtlich der möglichen und einsetzbaren Polykation-Verbindungen.

In das Bad zur Kopplung des Polykation(gemisch)s an der modifizierten ABS-Oberfläche werden Konzentrationen vorzugsweise < 5 Gew.-% und besonders bevorzugt zwischen 0,5 und 2 Gew.-% an Polykation(gemisch) in Wasser und gegebenenfalls unter Zusatz von Säure (wie beispielsweise Essigsäure und/oder Mineralsäure) eingesetzt. Die Konzentration an Polykation(gemisch) im Bad ist abhängig von der Art, der Ladungsdichte im Makromolekül, der Art der kationischen Gruppen (wie primäre und/oder sekundäre und/oder tertiäre Aminogruppen, wobei die primären und sekundäre Aminogruppen für die chemische Kopplung an der modifizierten ABS-Oberfläche bevorzugt werden und gegebenenfalls das Polykation(gemisch) auch teilweise quartäre Ammoniumgruppen besitzen kann), dem Verzweigungsgrad und dem Molekulargewicht. Für das jeweils eingesetzte Polykation(gemisch) sind die Badparameter pH-Wert, Konzentration und Temperatur speziell einzustellen, d.h. zu optimieren, was für den (Galvanotechnik-)Fachmann mit wenigen Versuchen möglich ist.

Als vorteilhaft hat sich erwiesen, das Polykation(gemisch) als Amin-/AmmoniumVerbindung gelöst in Wasser einzusetzen, d.h. falls die Aminogruppen des Polykation(gemisch)s als primäre und/oder sekundäre und/oder tertiäre Aminogruppen vorliegen, werden diese wenigstens teilweise durch Säurezusatz in die Ammonium-Form überführt.

Als vorteilhaft haben sich bei den synthetisch über Polymerisation und/oder Polykondensation hergestellten Polykationen Molekulargewichte < 100.000 D (Dalton) und noch vorteilhafter Molekulargewichte < 20.000 D erwiesen, wobei der optimale Bereich des Molekulargewichts für jedes spezielle Polykation(gemisch) in Abhängigkeit vom Verzweigungsgrad, der Gruppen- und Ladungsdichte in Versuchen bestimmt werden muss. Zu hohe Molekulargewichte hochverzweigter Polykationen haben sich als weniger günstig erwiesen, da die optimale Anlagerung und Bedeckung der ABS-Bauteiloberfläche nicht immer problemlos erfolgt.

Beim verzweigten Polyethylenimin als Polykation hat sich das Durchschnittsmolekulargewicht Mₙ im Bereich von 10.000 bis 60.000 als vorteilhaft erwiesen.

Die stabile Kopplung des Polykation(gemisch)s an der ABS-Oberfläche kann über pH-abhängige Zeta-Potenzial-Messungen nachgewiesen werden. Als weiteres Verfahren kann bei Polykationen mit Aminogruppen die bekannte Anlagerungsreaktion des aminogruppensensitiven Fluoreszenzmarkers Fluorescamin zum Nachweis herangezogen werden.

Auch ein intensives Waschen mit verdünnten Säuren oder Laugen änderte nichts an der Oberflächenmodifizierung. Der Verlauf der Zeta-Potenzial-Kurven sowie die Lage des isoelektrischen Punkts sind auch nach intensivem Waschen nahezu deckungsgleich, was die Stabilität dieser Oberflächenmodifizierung belegt.

Bevorzugt werden als Polyanion(gemisch) für die Bildung eines Polyelektrolytkomplexes an der ABS-Oberfläche eingesetzt:
- Poly(meth-)acrylsäure und/oder Copolymere ohne und/oder mit weiteren funktionellen Gruppen, die über die Copolymerisation und/oder polymeranaloge Umsetzungen eingeführt wurden und/oder
- Maleinsäure(anhydrid)-Copolymere und deren Derivate als teilweise oder vollständig modifizierte Halbester und/oder Halbamid und/oder als wasserlösliche Imide (wie beispielsweise mit ε- Caprolactam modifiziertes und imidisiertes alt-Propen-Maleinsäureanhydrid- Copolymeres) ohne und/oder mit (Rest-)Anhydridgruppen und/oder mit weiteren funktionellen Gruppen, die über die Copolymerisation und/oder eine polymeranaloge Umsetzung/Modifizierung von Maleinsäure(anhydrid)-Gruppen gekoppelt vorliegen

- Itaconsäure(anhydrid)-(Co-)Polymere und deren Derivate als teilweise oder vollständig modifizierte Halbester und/oder Halbamid und/oder als wasserlösliche Imide (wie beispielsweise mit ε- Caprolactam modifiziertes und imidisiertes Itaconsäureanhydrid-Copolymeres) ohne und/oder mit (Rest-)Anhydridgruppen und/oder mit weiteren funktionellen Gruppen, die über die Copolymerisation und/oder eine polymeranaloge Umsetzung/Modifizierung von Itaconsäure(anhydrid)-Gruppen gekoppelt vorliegen
- Fumarsäure-Copolymere und deren Derivate als teilweise oder vollständig modifizierte Halbester und/oder Halbamid und/oder mit weiteren funktionellen Gruppen, die über die Copolymerisation und/oder eine polymeranaloge Umsetzung/Modifizierung von Fumarsäuregruppen gekoppelt vorliegen.

Die Aufzählung listet verfügbare/kommerzielle und synthetisch leicht herstellbare Polyanionen auf, beruht aber nicht auf Vollständigkeit hinsichtlich der möglichen und einsetzbaren Polyanion-Verbindungen.

Die Auswahl der Agenzien und die Durchführung der Modifizierung der ABS-Oberflächen mit Polykation(gemisch) sowie die als Option mögliche (Weiter-)Modifizierung mit Polyanion(gemisch) und/oder Vernetzungsagenz(ien) erfolgt nach den für den Fachmann geläufigen chemischen Kenntnissen und wird in den Beispielen an wenigen konkreten Ausführungsvarianten näher erläutert.

Das Wesentliche dieser Erfindung ist, dass die Kautschuk-/Polybutadien-Phase der ABS-Oberfläche primär im ersten Schritt chemisch modifiziert wird, und folgend mit einer chemisch gekoppelten, vorteilhafterweise monomolekularen, Polymer- oder Polyelektrolyt-Schicht, vorteilhafterweise einer Polykation(gemisch)-Schicht, mit einer Schichtdicke im Nanometerbereich ausgerüstet wird: Nach Erzeugung von Metallkeimen in dieser so modifizierten ABS-Oberfläche wird das Bauteil in das elektrochemische/galvanotechnische Metallisierungsverfahren eingesetzt, oder, falls erforderlich, weil die Verbundhaftung zwischen der ABS-Oberfläche und dem elektrochemisch abgeschiedenen, metallischen Niederschlag und/oder Überzug und/oder Schicht noch nicht ausreichend hoch ist, in einem oder mehreren Folgeschritten chemisch durch Anlagerung eines Polyanion(gemisch)s und Polykation(gemisch)s im Wechsel und/oder durch Reaktion mit Vernetzungsagenz(ien) (weiter-)modifiziert und in dieser oberflächenmodifizierten Form in das elektrochemische/galvanotechnische Metallisierungsverfahren eingesetzt wird, d.h. nach der Erzeugung von Metallkeimen in dieser gekoppelten Schicht auf der modifizierten ABS-Oberfläche kann das klassische elektrochemische Metallabscheidungsverfahren fortgesetzt werden.

Mit der Erfindung können ABS-Bauteil-/Kunststoffoberflächen in einem Cr(VI)-freien Verfahren nach einer speziellen chemischen Oberflächenmodifizierung und nach Erzeugung von Metallkeinem galvanotechnisch/elektrochemisch mit einer oder mehreren Metallschicht(en) ausgerüstet werden, und das Verfahren hat zudem noch den Vorteil, dass die vorhandene Galvanotechnik größtenteils weiter verwendet werden kann.

Nachfogend wird die Erfindung an mehreren Ausführungsbeispielen näher erläutert.

### Beispiel 1: Oberflächenmodifizierung von ABS durch Bromierung

Herstellung der Bromid/Bromat-Lösung: 25g NaBr und 2,5g NaBrO₃ in 1000 ml destilliertem Wasser lösen.

100 ml dieser NaBr/NaBr0₃-Lösung werden in einen 250 ml Erlenmeyer-Kolben vorgelegt. In die Lösung werden 5 ABS-Stränge (Durchmesser 2 mm x Länge 10 mm) und 5 runde ABS-Platten (Durchmesser 20 mm x Dicke 1 mm) gegeben. Die Lösung wird unter Rühren mit einem Magnetrührer in einem Ölbad auf 50 °C temperiert. In die Lösung wird langsam so viel 20%-ige H₂SO₄ (26 Tropfen) zugetropft, bis in der Lösung eine hellgelbe Färbung bestehen bleibt. Anschließend wird noch 1 Stunde gerührt.

Nach dem Abkühlen wird die Lösung dekantiert, und die ABS-Teile werden 3-mal mit destilliertem Wasser gewaschen, anschließend 3-mal mit Methanol gespült und bei 60 °C getrocknet. Die ABS-Teile waren gleichmäßig leicht hellbraun verfärbt.
Die EDX-Untersuchung der ABS-Proben ergab, dass an der ABS-Oberfläche eine gleichmäßige Verteilung von Brom nachweisbar war.

Zwei ABS-Stränge und 2 ABS-Platten werden in einem 100 ml Erlenmeyer-Kolben zusammen mit 50 ml einer wässrigen 1 %-igen PEI-Lösung (PEI = Polyethylenimin, Aldrich, Mₙ = 10.000) auf 60 °C erwärmt und 2 Stunden gerührt. Nach dem Abkühlen werden die Teile mehrfach mit destilliertem Wasser gewaschen und anschließend getrocknet.
Zeta-Potenzialmessungen belegen eine Kopplung von PEI an der ABS-Oberfläche im Vergleich zur nur bromierten ABS-Oberfläche. Mit der Fluorescamin-Methode wurde ferner der Nachweis von gekoppelten Aminogruppen an den Oberflächen der ABS-Stränge und ABS-Platten geführt.

### Beispiel 1a: Galvanisierung einer PEI-modifizierten ABS-Oberfläche

Mit PEI oberflächenmodifizierte ABS-Platten werden 15 Minuten in eine auf 50 °C temperierte, wässrige Keimbildnerlösung aus 1 g/l PdCl₂ und 20 g/l HCl getaucht. Anschließend werden durch Reduktion der Palladium-Ionen mit Formaldehyd die Palladium-Metallkeime erzeugt.
Auf die so aktivierte ABS-Oberfläche wird anschließend durch chemisch reduktives Abscheiden eine Nickel-Leitschicht aufgebracht. Nach dem Spülen werden die so vorbereiteten Platten elektrochemisch weiter mit Nickel beschichtet.

### Beispiel 1b: Galvanisierung einer PEK-modifizierten ABS-Oberfläche

Auf mit PEI oberflächenmodifizierten ABS-Platten werden wie in Beispiel 1a Palladium-Metallkeime erzeugt. Nach dem Spülen werden dann diese Platten mit einer 0,1 %-igen alt-Propen-Maleinsäure-n-butylhalbamid-Lösung (hergestellt aus alt-Propen-Maleinsäureanhydrid durch Umsetzung mit N-Butylamin in Wasser) zur Bildung eines Polyelektrolytkomplexes [PEK] an der Oberfläche behandelt. Die Platten werden gespült, und auf die so aktivierten ABS-Oberflächen wird durch chemisch reduktives Abscheiden die Nickel-Leitschicht aufgebracht. Nach dem Spülen werden die so vorbereiteten Platten elektrochemisch weiter vernickelt. [PEK ... Polyelektrolytkomplex]

### Beispiel 2: Oberflächenmodifizierung von ABS durch Epoxidierung

In einen 100 ml Erlenmeyer-Kolben werden 5 ABS-Stränge (Durchmesser 2 mm x Länge 10 mm) und 5 runde ABS-Platten (Durchmesser 20 mm x Dicke 1 mm) mit wenig destilliertem Wasser überschichtet, in einem Ölbad auf 40 °C erwärmt und mit einem Magnetrührer in Bewegung gehalten. Anschließend werden unter Rühren langsam 50 ml 8 %-ige Peroxyessigsäure-Lösung zusammen mit 2 g Natriumacetat x 3 H₂0 innerhalb 1 Stunde zugetropft. Die Mischung wird noch 3 Stunden bei 40 °C gerührt.

Die ABS-Teile werden entnommen, mit Wasser und anschließend mit Methanol gewaschen und bei 60 °C getrocknet.

Eine so oberflächenmodifizierte ABS-Platte (mit einer an der Oberfläche epoxidierten Polybutadien-Phase) wird in 20 ml Methanol mit 0,5 g 3,5-Dichloranilin 1 Stunde bei 50 °C behandelt. Nach dem Abkühlen wird die Platte mit Methanol bei 50 °C extrahiert, mit Methanol gewaschen und getrocknet. Die EDX-Untersuchung der ABS-Probe ergab, dass an der ABS-Oberfläche eine gleichmäßige Verteilung von Chlor durch das gebundene 3,5- Dichloranilin nachweisbar war.

2 ABS-Stränge und 2 ABS-Platten mit oberflächlich epoxidierter Polybutadien-Phase werden in einem 100 ml Erlenmeyer-Kolben zusammen mit 50 ml einer wässrigen 1 %-igen PEI-Lösung (PEI = Polyethylenimin, Aldrich, Mₙ= 60.000) auf 60 °C erwärmt und 1 Stunde gerührt. Nach dem Abkühlen werden die Teile mehrfach mit destilliertem Wasser gewaschen und anschließend getrocknet. Zeta-Potenzialmessungen belegen eine Kopplung von PEI an der ABS-Oberfläche im Vergleich zur ABS-Oberfläche mit nur oberflächlich epoxidierter Polybutadien-Phase. Mit der Fluorescamin-Methode wurde ferner der Nachweis von gekoppelten Aminogruppen an den Oberflächen der ABS-Stränge und ABS-Platten geführt.

### Beispiel 2a:

Mit PEI oberflächenmodifizierte ABS-Platten werden 15 Minuten in eine auf 50 °C temperierte, ammoniakalische Silbernitrat-Lösung (1 g/l AgN0₃) als Keimbildnerlösung getaucht. Anschließend werden durch Reduktion der Silber-Ionen mit Formaldehyd die Silber-Metallkeime erzeugt. Auf die so aktivierte ABS-Oberfläche wird anschließend durch chemisch reduktives Abscheiden eine Kupfer-Leitschicht aufgebracht. Nach dem Spülen werden die so vorbereiteten Platten elektrochemisch weiter mit Kupfer beschichtet.

### Beispiel 2b:

Auf mit PEI oberflächenmodifizierten ABS-Platten werden wie in Beispiel 2a Silber-Metallkeime erzeugt. Nach dem Spülen werden dann diese Platten 5 Minuten in eine 0,1 %-ige TGIC(Triglycidylisocyanurat)-Ethanol-Lösung zur teilweisen Vernetzung der PEI-Phase an der Oberfläche gehängt. Die Platten werden gespült, und auf die so aktivierten ABS-Oberflächen wird durch chemisch reduktives Abscheiden die Kupfer-Leitschicht aufgebracht. Nach dem Spülen werden die so vorbereiteten Platten elektrochemisch in einem Kupfer-Galvanisierbad weiter verkupfert.

### Beispiel 3: Oberflächenmodifizierung von ABS durch Chlorhydrinierung

In einen 100 ml Erlenmeyer-Kolben werden 5 ABS-Stränge (Durchmesser 2 mm x Länge 10 mm) und 5 runde ABS-Platten (Durchmesser 20 mm x Dicke 1 mm) mit wenig destilliertem Wasser und 50 ml Natriumhypochlorit-Lösung (aktives Chlor 10 bis 13 %, Aldrich) überschichtet, in einem Ölbad auf 40 °C erwärmt und mit einem Magnetrührer in Bewegung gehalten. Anschließend werden unter Rühren langsam 25 ml 20%-ige H₂SO₄ (tropfenweise) innerhalb 1 Stunde zugetropft Die Mischung wird noch 1 Stunde bei 40 °C gerührt.
Die ABS-Teile werden entnommen, mit Wasser und anschließend mit Methanol gewaschen und bei 60 °C getrocknet.

Eine so oberflächenmodifizierte ABS-Platte (mit einer an der Oberfläche teilweise chlorhydrinierten Polybutadien-Phase) wird mittels EDX untersucht. Die Untersuchung der ABS-Oberfläche ergab, dass an der ABS-Oberfläche eine gleichmäßige Verteilung von Chlor nachweisbar war.

Zwei ABS-Stränge und 2 ABS-Platten mit oberflächlich chlorhydrinierter Polybutadien-Phase werden in einem 100 ml Erlenmeyer-Kolben zusammen mit 50 ml einer wässrigen 1 %-igen PEI-Lösung (PEI = Polyethylenimin, Aldrich, Mₙ = 60.000) auf 60 °C erwärmt. Innerhalb 1 Stunde werden unter Rühren 10 ml 10 %-ige NaOH-Lösung zugetropft Nach 2 Stunden Rühren und Abkühlen werden die Teile mehrfach mit destilliertem Wasser gewaschen und anschließend getrocknet.

Zeta-Potenzialmessungen belegen eine Kopplung von PEI an der ABS-Oberfläche im Vergleich zur ABS-Oberfläche mit Chlorhydringruppen und mit oberflächlich epoxidierter Polybutadien-Phase. Mit der Fluorescamin-Methode wurde ferner der Nachweis von gekoppelten Aminogruppen an den Oberflächen der ABS-Stränge und ABS-Platten geführt.

Auf mit PEI oberflächenmodifizierten ABS-Platten werden wie in Beispiel 1a Palladium-Metallkeime erzeugt. Nach dem Spülen werden dann diese Platten 5 Minuten in eine 0,1 %-ige alt-Propen-Maleinsäureanhydrid/Aceton-Lösung getaucht und danach mit Aceton abgespült. Die getrockneten Teile werden anschließend 15 Minuten mit einer wässrig-ammoniakalischen Lösung behandelt, wobei sich ein teilweise chemisch kovalent gekoppelter Polyelektrolytkomplex an der Oberfläche ausbildet. Die Platten werden gespült, und auf die so aktivierten ABS-Oberflächen wird durch chemisch reduktives Abscheiden die Nickel-Leitschicht aufgebracht. Nach dem Spülen werden die so vorbereiteten Platten elektrochemisch weiter vernickelt.

## Patentansprüche

1. Modifizierte ABS-Oberflächen, bei denen mindestens teilweise die an der Oberfläche zugänglichen Doppelbindungen der Kautschuk-/Polybutadien-Komponente des ABS mit Chlorid und/oder Bromid und/oder Jodid und/oder mit Epoxy- und/oder Chlorhydrin-Gruppen chemisch modifizert sind, an die wiederum durch reaktive Umsetzung Amino- und/oder Thiol- und/oder Thiolat-Gruppen von Polymeren und/oder Polyelektrolyten chemisch gekoppelt sind, wobei die so chemisch gekoppelten Polymere und/oder Polyelektrolyte zur Einlagerung von Metallkeimen für die elektrochemische/galvanische Abscheidung von metallischen Niederschlägen und/oder Überzügen und/oder Schichten auf die modifizierte ABS-Oberfläche in der Lage sind.

2. Modifizierte ABS-Oberflächen nach Anspruch 1, bei denen die an der Oberfläche zugänglichen Doppelbindungen der Kautschuk-/Polybutadien-Komponente des ABS vor der Kopplung von Polymeren und/oder Polyelektrolyten mit Epoxy-Gruppen chemisch modifiziert sind.

3. Modifizierte ABS-Oberflächen nach Anspruch 1, bei denen Polymere und/oder Polyelektrolyte durch reaktive Umsetzung Bromid und/oder Jodid und/oder mit Epoxy- und/oder Chlorhydrin-Gruppen der Kautschuk-/Polybutadien-Komponente des ABS mit Amino-Gruppen dieser Polymere und/oder Polyelektrolyten chemisch gekoppelt sind.

4. Modifizierte ABS-Oberflächen nach Anspruch 1, bei denen als chemisch gekoppelte, kationische Polyelektrolyte ein oder mehrere kationische Polyelektrolyte, wie Polyethylenimin und/oder Polyallylamin und/oder Polyvinylamin, vorhanden sind.

5. Modifizierte ABS-Oberflächen nach Anspruch 1, bei denen als Polymere ein oder mehrere, mit Amino- und/oder Thiol- und Thiolat-Gruppen modifizierte, wasserlösliche Polymere, wie (Meth-)Acrylsäure-(Co-)Polymere und/oder (MethAcrylsäureester-(Co-)Polymere und/oder Maleinsäure(anhydrid)-Copolmere und/oder Itaconsäure(anhydrid)-(Co-)Polymere und/oder Fumarsäure-Copolymere und/oder deren Derivate vorhanden sind.

6. Modifizierte ABS-Oberflächen nach Anspruch 1, bei denen die Polymere und/oder Polyelektrolyte, die reaktive primäre und/oder sekundäre und/oder tertiäre Amino-und/oder quartäre Ammonium-Gruppen aufweisen, nach der reaktiven Umsetzung chemisch kovalent vernetzt und/oder in einem Polyelektrolytkomplex komplexiert/ionisch vernetzt sind, wobei vorteilhafterweise als Vernetzungshilfsmittel niedermolekulare und/oder oligomere und/oder polymere Epoxidverbindungen vorhanden sind.

7. Verfahren zur Herstellung von modifizierten ABS-Oberflächen, bei dem die Doppelbindungen der Kautschuk-/Polybutadien-Komponente an der Oberfläche des ABS durch Epoxidierung und/oder Halogenierung und/oder Chlorhydrinierung aktiviert und mit Chlorid und/oder Bromid und/oder Jodid und/oder mit Epoxy-und/oder Chlorhydrin-Gruppen modifiziert werden und nachfolgend Chlorid und/oder Bromid und/oder Jodid und/oder die Epoxy- und/oder Chlorhydrin-Gruppen mit Amino- und/oder Thiol- und/oder Thiolat-Gruppen von Polymeren und/oder Polyelektrolyten reaktiv unter chemischer Kopplung dieser Polymere und/oder Polyelektrolyte umgesetzt werden und nachfolgend in die gekoppelten Polymere und/oder Polyelektrolyte Metallionen eingelagert und diese nachfolgend zu Metallkeimen für die elektrochemische/galvanische Abscheidung von metallischen Niederschlägen und/oder Überzügen und/oder Schichten reduziert werden.

8. Verfahren nach Anspruch 7, bei dem die Polymere und/oder Polyelektrolyte in einem nachfolgenden Schritt kovalent vernetzt und/oder durch Polyelektrolytkomplexbildung komplexiert/ionisch vernetzt werden, wobei vorteilhafterweise Vernetzungshilfsmittel in Form von niedermolekularen und/oder oligomeren und/oder polymeren Epoxy-Verbindungen zugegeben werden.

9. Verfahren nach Anspruch 7, bei dem die Epoxidierung durch Zugabe von Percarbonsäuren, wie Peressigsäure, oder Carbonsäuren, wie Ameisensäure, und Wasserstoffperoxid durchgeführt wird.

10. Verfahren nach Anspruch 7, bei dem die Halogenierung durch Brom und/oder Jod und/oder eine Bromid/Bromat-Umsetzung unter Säurezugabe und/oder eine Jodid/Jodat-Umsetzung unter Säurezugabe durchgeführt wird.

11. Verfahren nach Anspruch 7, bei dem die Chlorhydrinierung durch Zugabe von Hypochlorit unter Säurezugabe realisiert wird.

12. Verfahren nach Anspruch 7, bei dem als ABS-Oberflächen, Oberflächen aus unverändertem ABS und/oder aus ABS-mit Polyamid modifiziert (ABS/PA) und/oder aus ABS mit Polycarbonat modifiziert (ABS/PC) eingesetzt werden.

13. Verfahren nach Anspruch 7, bei dem die gekoppelten Polymere und/oder Polyelektrolyte mit Metallsalzen in Kontakt gebracht werden, und die, in die gekoppelten Polymere und/oder Polyelektrolyte eingelagerten Metallionen dann zu Metallkeimen reduziert werden und nachfolgend die elektrochemische Abscheidung von metallischen Niederschlägen und/oder Überzügen und/oder Schichten durchgeführt wird.

14. Verfahren nach Anspruch 7, bei dem als Metallsalze/Metallionen Edelmetallsalze/-ionen und/oder Kupfersalze/-ionen eingelagert und zu Metallkeimen reduziert werden.

15. Verwendung von modifizierten Oberflächen aus ABS nach mindestens einem der Ansprüche 1 bis 6 und hergestellt nach mindestens einem der Ansprüche 7 bis 14 für die elektrochemische/galvanische Beschichtung mit Metall(en).

## Claims

1. Modified ABS surfaces for which at least partially the surface-accessible double bonds of the rubber/polybutadiene component of the ABS have been chemically modified with chloride and/or bromide and/or iodide and/or with epoxy groups and/or chlorohydrin groups, to which in turn through reactive conversion amino groups and/or thiol groups and/or thiolate groups of polymers and/or polyelectrolytes have been chemically coupled, with the polymers and/or polyelectrolytes thus chemically coupled being capable of incorporating metal seeds for the electrochemical/galvanic deposition of metallic precipitates and/or coatings and/or layers onto the modified ABS surface.

2. Modified ABS surfaces according to Claim 1, for which the surface-accessible double bonds of the rubber/polybutadiene component of the ABS have been chemically modified with epoxy groups before the coupling of polymers and/or polyelectrolytes.

3. Modified ABS surfaces according to Claim 1, for which polymers and/or polyelectrolytes have been chemically coupled with amino groups of these polymers and/or polyelectrolytes through reactive conversion bromide and/or iodide and/or with epoxy groups and/or chlorohydrin groups of the rubber/polybutadiene component of the ABS.

4. Modified ABS surfaces according to Claim 1, wherein one or more cationic polyelectrolytes, such as polyethyleneimine and/or polyallylamine and/or polyvinylamine, are present as chemically coupled, cationic polyelectrolytes.

5. Modified ABS surfaces according to Claim 1, wherein one or more water-soluble polymers, such as (meth)acrylic acid (co)polymers and/or (meth)acrylic ester (co)polymers and/or maleic acid (anhydride) copolymers and/or itaconic (anhydride) (co)polymers and/or fumaric acid copolymers and/or derivatives thereof, modified with amino groups and/or thiol groups and thiolate groups, are present as polymers.

6. Modified ABS surfaces according to Claim 1, wherein the polymers and/or polyelectrolytes which have reactive primary and/or secondary and/or tertiary amino groups and/or quaternary ammonium groups after the reactive conversion have been chemically covalently crosslinked and/or complexed/ionically crosslinked in a polyelectrolyte complex, with low molecular mass and/or oligomeric and/or polymeric epoxide compounds being present advantageously as crosslinking assistants.

7. Method for producing modified ABS surfaces, wherein the double bonds of the rubber/polybutadiene component on the surface of the ABS are activated by epoxidation and/or halogenation and/or chlorohydrination and are modified with chloride and/or bromide and/or iodide and/or with epoxy groups and/or chlorohydrin groups and subsequently chloride and/or bromide and/or iodide and/or the epoxy groups and/or chlorohydrin groups are converted reactively with amino groups and/or thiol groups and/or thiolate groups of polymers and/or polyelectrolytes, with chemical coupling of these polymers and/or polyelectrolytes, and subsequently metal ions are incorporated into the coupled polymers and/or polyelectrolytes and these ions are subsequently reduced to metal seeds for the electrochemical/galvanic deposition of metallic precipitates and/or coatings and/or layers.

8. Method according to Claim 7, wherein the polymers and/or polyelectrolytes in a subsequent step are galvanically crosslinked and/or complexed/ionically crosslinked by polyelectrolyte complex formation, where advantageously crosslinking assistants in the form of low molecular mass and/or oligomeric and/or polymeric epoxy compounds are added.

9. Method according to Claim 7, wherein the epoxidation is carried out by adding percarboxylic acids, such as peracetic acid, or carboxylic acids, such as formic acid, and hydrogen peroxide.

10. Method according to Claim 7, wherein the halogenation is carried out by bromine and/or iodide and/or a bromide/bromate reaction with addition of acid and/or an iodide/iodate reaction with addition of acid.

11. Method according to Claim 7, wherein the chlorohydrination is realized by adding hyperchloride with addition of acid.

12. Method according to Claim 7, wherein ABS surfaces used are surfaces of unaltered ABS and/or of ABS modified with polyamide (ABS/PA) and/or of ABS modified with polycarbonate (ABS/PC).

13. Method according to Claim 7, wherein the coupled polymers and/or polyelectrolytes are contacted with metal salts and the metal ions incorporated into the coupled polymers and/or polyelectrolytes are then reduced to metal seeds and subsequently the electrochemical deposition of metallic precipitates and/or coatings and/or layers is carried out.

14. Method according to Claim 7, wherein metal salts/metal ions incorporated and reduced to metal seeds are noble metal salts/ions and/or copper salts/ions.

15. Use of modified surfaces of ABS according to at least one of Claims 1 to 6 and produced according to at least one of Claims 7 to 14 for electrochemical/galvanic coating with metal(s).

## Revendications

1. Surfaces modifiées d'ABS, pour lesquelles les doubles liaisons accessibles au niveau de la surface du composant de caoutchouc/polybutadiène de l'ABS sont modifiées chimiquement au moins partiellement par du chlorure et/ou du bromure et/ou de l'iodure et/ou par des groupes époxy et/ou chlorhydrine, sur lesquels sont couplés à leur tour, chimiquement, par transformation réactive, des groupes amino et/ou thiol et/ou thiolate de polymères et/ou de polyélectrolytes, les polymères et/ou polyélectrolytes ainsi couplés chimiquement étant en mesure d'incorporer des germes métalliques pour le dépôt électrochimique/galvanique de précipités et/ou de revêtements et/ou de couches métalliques sur la surface modifiée d'ABS.

2. Surfaces modifiées d'ABS selon la revendication 1, pour lesquelles les doubles liaisons accessibles au niveau de la surface du composant de caoutchouc/polybutadiène de l'ABS sont modifiées chimiquement par des groupes époxy avant le couplage de polymères et/ou de polyélectrolytes.

3. Surfaces modifiées d'ABS selon la revendication 1, pour lesquelles des polymères et/ou des polyélectrolytes sont couplés chimiquement par transformation réactive bromure et/ou iodure et/ou avec des groupes époxy et/ou chlorhydrine du composant caoutchouc/polybutadiène de l'ABS avec des groupes amino de ces polymères et/ou polyélectrolytes.

4. Surfaces modifiées d'ABS selon la revendication 1, pour lesquelles un ou plusieurs polyélectrolytes cationiques, tels que la polyéthylène-imine et/ou la polyallylamine et/ou la polyvinylamine, sont présents en tant que polyélectrolytes cationiques couplés chimiquement.

5. Surfaces modifiées d'ABS selon la revendication 1, pour lesquelles un ou plusieurs polymères solubles dans l'eau, tels que des (co)polymères de l'acide (méth)acrylique et/ou des (co)polymères d'ester de l'acide (méth)acrylique et/ou des copolymères d'(anhydride d')acide maléique et/ou des (co)polymères d'(anhydride d')acide itaconique et/ou des copolymères d'acide fumarique et/ou leurs dérivés, modifiés par des groupes amino et/ou thiol et thiolate, sont présents en tant que polymères.

6. Surfaces modifiées d'ABS selon la revendication 1, pour lesquelles les polymères et/ou les polyélectrolytes, qui présentent des groupes réactifs amino primaire et/ou secondaire et/ou tertiaire et/ou ammonium quaternaire, sont réticulés chimiquement par covalence et/ou complexés/réticulés ioniquement dans un complexe polyélectrolytique après la transformation réactive, des composés époxyde de bas poids moléculaire et/ou oligomères et/ou polymères étant avantageusement présents en tant qu'adjuvants de réticulation.

7. Procédé pour la préparation de surfaces modifiées d'ABS, dans lequel les doubles liaisons du composant caoutchouc/polybutadiène à la surface de l'ABS sont activées par époxydation et/ou halogénation et/ou chlorhydrination et modifiées par du chlorure et/ou du bromure et/ou de l'iodure et/ou par des groupes époxy et/ou chlorhydrine et le chlorure et/ou le bromure et/ou l'iodure et/ou les groupes époxy et/ou chlorhydrine sont ensuite transformés de manière réactive, avec un couplage chimique, avec des groupes amino et/ou thiol et/ou thiolate de polymères et/ou de polyélectrolytes de ces polymères et/ou polyélectrolytes et des ions métalliques sont ensuite incorporés dans les polymères et/ou polyélectrolytes couplés et ces ions sont ensuite réduits en germes métalliques pour le dépôt électrochimique/galvanique de précipités et/ou de revêtements et/ou de couches métalliques.

8. Procédé selon la revendication 7, dans lequel les polymères et/ou les polyélectrolytes sont réticulés par covalence et/ou complexés/réticulés ioniquement par formation de complexes polyélectrolytiques dans une étape suivante, des adjuvants de réticulation sous forme de composés époxy de bas poids moléculaire et/ou oligomères et/ou polymères étant avantageusement ajoutés.

9. Procédé selon la revendication 7, dans lequel l'époxydation est réalisée par addition d'acides percarboxyliques, tels que l'acide peracétique, ou d'acides carboxyliques, tels que l'acide formique, et de peroxyde d'hydrogène.

10. Procédé selon la revendication 7, dans lequel l'halogénation est réalisée par du brome et/ou par de l'iode et/ou par une transformation bromure/bromate avec addition d'acide et/ou par une transformation iodure/iodate avec addition d'acide.

11. Procédé selon la revendication 7, dans lequel la chlorhydrination est réalisée par addition d'hypochlorite avec addition d'acide.

12. Procédé selon la revendication 7, dans lequel on utilise, en tant que surfaces d'ABS, des surfaces en ABS non modifié et/ou en ABS modifié par du polyamide (ABS/PA) et/ou en ABS modifié par du polycarbonate (ABS/PC).

13. Procédé selon la revendication 7, dans lequel les polymères et/ou polyélectrolytes couplés sont mis en contact avec des sels métalliques et les ions métalliques incorporés dans les polymères et/ou polyélectrolytes couplés sont ensuite réduits en germes métalliques et le dépôt électrochimique de précipités et/ou de revêtements et/ou de couches métalliques est ensuite réalisé.

14. Procédé selon la revendication 7, dans lequel des sels/ions de métal noble et/ou des sels/ions de cuivre sont incorporés en tant que sels métalliques/ions métalliques et réduits en germes métalliques.

15. Utilisation de surfaces modifiées en ABS selon au moins l'une quelconque des revendications 1 à 6 et préparées selon au moins l'une quelconque des revendications 7 à 14 pour le revêtement électrochimique/galvanique par un/des métal/métaux.
